# EUROPÄISCHE PATENTANMELDUNG

(11) **EP 4 245 982 A1**
(43) Veröffentlichungstag der Anmeldung: **20.09.2023**
(21) Anmeldenummer: 23157817.0
(22) Anmeldetag: 21.02.2023
(51) Int. Cl.: F02D 41/22, F02D 41/14

(54) **VERFAHREN ZUR BESTIMMUNG EINES FUNKTIONSKRITERIUMS EINES MESSWERTGEBERS EINES KRAFTFAHRZEUGES**

(30) Priorität: 03.03.2022 DE 102022105077
(71) Anmelder: VOLKSWAGEN AG, 38440 Wolfsburg (DE)
(72) Erfinder: NIKOLAUS, Norbert, 38533 Vordorf (DE); TRÜE, Michael, 39112 Magdeburg (DE)
(74) Vertreter: MFG Patentanwälte Meyer-Wildhagen Meggle-Freund Gerhard PartG mbB

(57) **Zusammenfassung**

Verfahren (100) zur Bestimmung eines Funktionskriteriums (110) eines Messwertgebers eines Kraftfahrzeuges (600) umfassend: Feststellen, mittels Vorbedingungen, ob ein vorgegebener Fahrzeugzustand des Kraftfahrzeuges vorliegt, Erfassen von Messwerten (403, 404, 405, 503, 504, 505, 506) von mindestens drei Messwertgebern, die die gleiche Messgröße messen, Errechnen eines Lageparameters (407, 507) aus den erfassten Messwerten, Errechnen eines Vergleichswertes aus dem erfassten Messwert zu dem errechneten Lageparameter, Ermitteln des Funktionskriteriums des Messwertgebers anhand eines Vergleichs des errechneten Vergleichswertes mit einem Schwellenwert (408, 409, 408', 409', 508, 509), wobei das Erfassen der Messwerte in einem Zeitraum nach der Initialisierung (ST) des Steuergerätes (305) einer Antriebsmaschine (601) durchgeführt wird, wenn die Vorbedingungen erfüllt sind und somit der vorgegebene Fahrzeugzustand vorliegt wird das ermittelte Funktionskriterium festgestellt.

## Beschreibung

Die Erfindung betrifft ein Verfahren zur Bestimmung eines Funktionskriteriums eines Messwertgebers eines Kraftfahrzeuges. Messwertgeber werden in Kraftfahrzeugen zu verschiedenen Zwecken eingesetzt.

Solche Messwertgeber und das Verfahren zur Bestimmung eines Funktionskriteriums sind auch auf andere Fahrzeug- und/oder Antriebskonzepte anwendbar (z. B.: Elektro-, Hybrid-, Brennstoffzellenantriebe, alternative Kraftstoffe).

Messwertgeber und Sensoren liefern Messgrößen, die zur Überwachung und zum Einstellen von Betriebszuständen dienen können. Ein Temperatursensor dient z. B. zum Einstellen der Verbrennung innerhalb einer als Verbrennungskraftmaschine ausgebildeten Antriebsmaschine. Auf der Basis eines Erfassens der Temperatur der angesaugten Luft und einer Temperatur der Abgase lässt sich zum Beispiel ein Mischverhältnis von Abgas und Luft für eine Abgasrückführung (AGR) ermitteln.

Das Einstellen der Verbrennung innerhalb einer als Verbrennungskraftmaschine ausgebildeten Antriebsmaschine kann zu geringeren Feinstoff- und Stickoxidwerten im Abgas führen. Um immer strengeren Abgasrichtlinien gerecht zu werden, müssen demnach die Temperatursensoren, welche zum Einstellen der Verbrennung herangezogen werden, ordnungsgemäß funktionieren. Dadurch wird eine Bestimmung eines Funktionskriteriums eines solchen Temperatursensors notwendig.

In anderen Fahrzeug- und/oder Antriebskonzepten können Temperatursensoren zum Überwachen und zum Einstellen von der jeweiligen Antriebsmaschine und Brennstoffzellen, Kühlkreisläufen, Steuergeräten oder Energiespeichern, wie zum Beispiel Batterien oder Wasserstofftanks, dienen.

Weiterhin muss überprüft werden ob die Bestimmung eines Funktionskriteriums in einem dafür vorgesehenen Fahrzeugzustand stattgefunden hat. Für den Fall von Temperatursensoren können dies eine Vielzahl von Kaltstartbedingungen sein.

Für den Fall, das die Messwertgeber Drucksensoren umfassen, die beispielsweise einen Absolutdruck, einen Relativdruck oder beides messen, ist ein Zweck, die Messung des Durchflusses von Fluiden durch Komponenten des Kraftfahrzuges. Zum Beispiel über den Druckabfall beim Durchströmen des Bauteils. Hierbei umfassen Fluide Kühlmittel, Ansaugluft und Abgase. Weiterhin kann ein Ladedruck, nach einem Turbolader oder einem Kompressor ebenfalls die Verbrennung innerhalb der Verbrennungskraftmaschine beeinflussen und damit auch die Feinstoff- und Stickoxidwerte im Abgas.

In anderen Fahrzeug- und/oder Antriebskonzepten können Drucksensoren zum Überwachen und zum Einstellen von der jeweiligen Antriebsmaschine und Brennstoffzellen, Kühlkreisläufen, Steuergeräten oder Energiespeichern, wie zum Beispiel Batterien oder Wasserstofftanks, dienen.

Dabei wird überprüft, ob die Bestimmung eines Funktionskriteriums in einem dafür vorgesehenen Fahrzeugzustand stattgefunden hat. Für Drucksensoren kann dies zum Beispiel eine Überprüfung umfassen, ob die Verbrennungskraftmaschine oder Pumpen im Kraftfahrzeug zum Zeitpunkt der Bestimmung des Funktionskriteriums gelaufen haben.

Es sind Verfahren bekannt bei denen die Messwerte der relevanten Messwertgeber, die gleiche Messgrößen messen, kreuzweise gegeneinander abgeglichen werden und ein Zähler die Anzahl und Schwellenwertüberschreitungen eines Messwertgebers bei diesen Kreuzvergleichen zählt. Ein Messwertgeber gilt als defekt, wenn sein Zähler eine Maximalanzahl überschreitet. Dies hat den Nachteil, dass viele Vergleiche durchgeführt werden müssen. Zudem müssen diese Vergleiche mit relativ großen Schwellenwerten durchgeführt werden, damit Umwelteinflüsse, die einen Gradienten der Messgröße in dem Kraftfahrzeug erzeugen, sowie die Toleranzen der einzelnen Messwertgeber, die gleiche Messgrößen messen, nicht zu Fehldiagnosen führen.

Aufgabe der vorliegenden Erfindung ist es, ein Verfahren zur Bestimmung eines Funktionskriteriums eines Messwertgebers eines Kraftfahrzeuges bereitzustellen, das die oben genannten Nachteile wenigstens teilweise überwindet.

Diese Aufgabe wird durch ein erfindungsgemäßes Verfahren zur Bestimmung eines Funktionskriteriums eines Messwertgebers eines Kraftfahrzeuges nach Anspruch 1 gelöst. Die Aufgabe wird auch durch ein Steuergerät mit einer Steuereinheit, die dazu eingerichtet ist, ein Verfahren zur Bestimmung eines Funktionskriteriums eines Messwertgebers in einer Verbrennungskraftmaschine durchzuführen, nach Anspruch 8 gelöst. Weiterhin wird die Aufgabe gelöst von einer Verbrennungskraftmaschine, die ein solches Steuergerät umfasst nach Anspruch 9. Ferner wird die Aufgabe gelöst von einem Kraftfahrzeug mit einer solchen Verbrennungskraftmaschine nach Anspruch 10.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Verfahren zur Bestimmung eines Funktionskriteriums eines Messwertgebers eines Kraftfahrzeuges umfasst: Feststellen, mittels Vorbedingungen, ob ein vorgesehener Fahrzeugzustand des Kraftfahrzeuges vorliegt, Erfassen von Messwerten von mindestens drei Messwertgebern, die die gleiche Messgröße messen, Errechnen eines Lageparameters aus den erfassten Messwerten, Errechnen eines Vergleichswertes aus einem erfassten Messwert zu dem errechneten Lageparameter, Ermitteln des Funktionskriteriums des Messwertgebers anhand eines Vergleichs des errechneten Vergleichswertes mit einem Schwellenwert, wobei das Erfassen der Messwerte in einem Zeitraum nach der Initialisierung des Steuergerätes einer Antriebsmaschine durchgeführt wird, wenn die Vorbedingungen erfüllt sind und somit der vorgesehene Fahrzeugzustand vorliegt wird das ermittelte Funktionskriterium festgestellt.

Es gibt Ausführungen bei denen der Messwertgeber ein Temperatursensor ist, der vorgegebene Fahrzeugzustand ein Kaltstart ist, die Vorbedingungen Kaltstartbedingungen sind und die Antriebsmaschine eine Verbrennungskraftmaschine ist.

Ein Kaltstart ist für den Vergleich der Messwerte der mindestens drei Temperatursensoren wichtig, da die Temperatursensoren während des Betriebs des Kraftfahrzeuges in ihren Verbaupositionen unterschiedlichen Betriebstemperaturen ausgesetzt sind. Durch den Kaltstart soll sichergestellt werden, dass die Temperaturen an den Verbaupositionen möglichst der Umgebungstemperatur entsprechen und somit gegeneinander vergleichbar sind.

Ob ein Kaltstart vorliegt, kann aufgrund verschiedener Bedingungen, den Kaltstartbedingungen, festgestellt werden. Eine Kaltstartbedingung kann beispielsweise ein minimaler Zeitwert sein, den die Abstellzeit überschreiten muss, damit ein Kaltstart vorliegen kann. Eine weitere Kaltstartbedingung kann beispielsweise eine Erkennung einer Motorblockheizung (auch: "block heater" oder "engine block heater") sein, sodass der Motorblock der Verbrennungskraftmaschine nicht vorgeheizt sein darf, damit ein Kaltstart vorliegen kann. Dies kann den Vergleich von Motorblock nahen Temperatursensoren mit Motorblock fernen Temperatursensoren verfälschen.

Eine weitere Kaltstartbedingung kann beispielsweise die Erkennung von Sonneneinstrahlung sein, die das Kraftfahrzeug von oben und im Innenraum erwärmen kann und somit Temperatursensoren, die weiter oben oder näher am Innenraum verbaut sind stärker erwärmt als Temperatursensoren die nahe am Unterboden des Kraftfahrzeuges verbaut sind. Die Sonneneinstrahlung darf demnach beispielsweise eine vorgeschriebene Intensität über einen vorgeschriebenen Zeitraum nicht überschreiten, damit ein Kaltstart vorliegen kann.

Eine weitere Kaltstartbedingung kann beispielsweise die Erkennung einer Standheizung sein. Dies hat einen analogen Effekt zu dem der Motorblockheizung, nur dass Temperatursensoren die näher an dem Innenraum verbaut sind stärker erwärmt werden als Temperatursensoren, die weiter vom Innenraum entfernt verbaut sind. Dies kann den Vergleich von Innenraum nahen und Innenraum fernen Temperatursensoren verfälschen. Demnach darf eine Standheizung den Innenraum nicht vorgewärmt haben, damit ein Kaltstart vorliegen kann.

Eine weitere Kaltstartbedingung kann beispielsweise eine Maximalzeit sein, die ein Steuergerät einer Verbrennungskraftmaschine bis zum Start der Verbrennungskraftmaschine nicht überschreiten darf, damit ein Kaltstart vorliegen kann. Nach dem Start des Steuergerätes kann sich das Steuergerät relativ schnell erwärmen. Wird ein Temperatursensor, der an dem Steuergerät verbaut ist, in dem erfindungsgemäßen Verfahren verwendet, kann durch die Maximalzeit eine Vergleichbarkeit dieses Temperatursensors mit anderen Temperatursensoren gewährleistet werden. Eine Kombination von Kaltstartbedingungen kann herangezogen werden, um das Vorliegen eines Kaltstarts zu überprüfen und eine Funktionsfreigabe für das Verfahren zur Bestimmung eines Funktionskriteriums eines Temperatursensors eines Kraftfahrzeuges zu erteilen.

Für die Berechnung des Lageparameters werden Messwerte von mindestens drei Temperatursensoren erfasst. Dadurch kann der Einfluss eines Ausreißers, der zum Beispiel durch einen defekten Temperatursensor gemessen wird, minimiert werden. Zum Beispiel ist der Median von zwei Messwerten empfindlich gegenüber solchen Ausreißern und würde keine Rückschlüsse zulassen, welcher der Temperatursensoren defekt ist. Der Median von drei Messwerten hingegen kann mit hoher Sicherheit eine Umgebungstemperatur schätzen, so lange maximal einer der drei Temperatursensoren defekt ist und Ausreißer misst. Lageparameter wie ein getrimmter Mittelwert bzw. getrimmtes arithmetisches Mittel brauchen zumindest drei Messwerte um entscheiden zu können, welcher der Messwerte ein Ausreißer ist und eliminiert werden soll, falls nur einer der Messwerte ein Ausreißer ist. Für eine Feststellung eines "nicht in Ordnung" Funktionskriteriums von zwei oder mehr defekten Temperatursensoren müssen Messwerte von mehr als drei Sensoren erfasst werden.

Ein Lageparameter wird aus den Messwerten errechnet, um eine zentrale Lage aus der Verteilung der Messwerte zu erhalten. Dieser Lageparameter gibt die Umgebungstemperatur bei Kaltstart am besten wieder. Es ist vorteilhaft, wenn der Lageparameter unempfindlich gegenüber ausreißenden Messwerten ist, da defekte Temperatursensoren am ehesten erkennbar sind, wenn sie Messwerte messen, die am Rande der Verteilung der Messwerte liegen.

Durch das Errechnen eines Lageparameters lassen sich die Messwerte aller beteiligten Temperatursensoren gegen den Lageparameter vergleichen. Dadurch wird die Anzahl an durchgeführten Vergleichen verringert, da nicht alle Messwerte zumindest einmal gegen alle anderen Messwerte verglichen werden müssen, sondern nur einmal gegen den Lageparameter.

Demnach wird für jeden Messwert ein Vergleichswert mit dem Lageparameter errechnet. Der Vergleichswert kann beispielsweise eine Differenz des Messwertes und des Lageparameters sein. Der Vergleichswert kann allerdings auch ein Quotient der beiden sein.

Für jeden Vergleichswert werden Schwellenwerte vorgegeben. Für das Feststellen eines "in Ordnung" Funktionskriteriums muss der Vergleichswert kleiner sein als ein oberer Schwellenwert und größer als ein unterer (negativer) Schwellenwert. Dadurch ergibt sich, dass ein Messwert nicht zu weit nach oben oder nach unten von dem Lageparameter abweichen darf, damit für den Temperatursensor, der den Messwert gemessen hat, ein "in Ordnung" Funktionskriterium festgestellt wird.

Ist ein Vergleichswert größer als ein oberer Schwellenwert oder kleiner als ein unterer Schwellenwert, so wird ein "nicht in Ordnung" Funktionskriterium festgestellt. Somit folgt für die Messwerte, dass ein "nicht in Ordnung" Funktionskriterium festgestellt wird, sollten die Messwerte weiter von dem Lageparameter nach oben oder nach unten abweichen, als der jeweilige Schwellenwert gestattet.

Für den Fall, dass der Lageparameter eines unteren Schwellenwertes außerhalb des Messbereiches des Temperatursensors liegt, kann das Verfahren zur Bestimmung eines Funktionskriteriums dieses Temperatursensors, dem der Schwellenwert zugeordnet ist, abgebrochen werden. Gleiches gilt für einen Lageparameter plus eines oberen Schwellenwertes.

Durch die Unempfindlichkeit des Lageparameters gegenüber von ausreißenden Messwerten und der allgemeinen Fehlertoleranz der einzelnen Messwerte können für jeden Vergleichswert Schwellenwerte vorgegeben werden, die eine kleinere Abweichung der Messwerte zulassen, als dies bei dem direkten Vergleich der Messwerte der Temperatursensoren der Fall ist.

Es gibt Ausführungen, bei denen die Temperatursensoren entweder aus einer Gruppe von luftseitigen Temperatursensoren, einer Gruppe von Motorblock- und Kühlmitteltemperatursensoren oder einer Gruppe von abgasseitigen Temperatursensoren gewählt sind.

Weiterhin können weitere Gruppen von Temperatursensoren verwendet werden. Die zunehmende Vernetzung von Kraftfahrzeugen untereinander und mit mobilen Endgeräten, Steuerungsmethoden, wie zum Beispiel die Gestensteuerung und Fahrerassistenzsysteme geben einen Anlass für das Verbauen zusätzlicher elektronischer Komponenten wie zum Beispiel Displays, Kameras und weiterer Steuergeräte. Diese Komponenten und ihre Steuergeräte können ebenfalls Temperatursensoren enthalten und, zum Beispiel in einer Gruppe der Elektronik, gruppiert werden sowie in dem Verfahren zur Bestimmung eines Funktionskriteriums eines Temperatursensors eines Kraftfahrzeuges verwendet werden.

Die luftseitigen Temperatursensoren sind teilweise in der Luftansaugung der Verbrennungskraftmaschine angeordnet. Hierein werden allerdings auch Temperatursensoren klassifiziert, von denen keine große Abweichung von der Umgebungstemperatur zu erwarten ist, wie zum Beispiel Kraftstofftemperatursensoren und Temperatursensoren in Elektronikkomponenten. Temperatursensoren, die in Elektrokomponenten des Kraftfahrzeuges angeordnet sind können weiterhin eine eigenständige Gruppe bilden, die unabhängig von den luftseitigen Temperatursensoren gruppiert werden.

Die Gruppe von Motorblock- und Kühlmitteltemperatursensoren sind am Motorblock oder im Kühlmittelkreislauf verbaut, während die abgasseitigen Temperatursensoren im Abgasstrang verbaut sind und die Temperaturen von Abgasen und Bauteilen, die mit Abgasen in Berührung kommen, messen. Weiterhin können auch Temperatursensoren an Antriebskomponenten bzw. Motoren und in Kühlkreisläufen von anderen Antriebsarten umfasst sein. Andere Antriebsarten umfassen zum Beispiel Wasserstoffverbrennungsantriebe, Brennstoffzellenantriebe und Elektroantriebe. Diese können dabei einzeln oder in Kombination miteinander oder mit einer Verbrennungskraftmaschine verbaut sein.

Von den luftseiteigen Temperatursensoren ist zu erwarten, dass diese beim Abkühlen schnell Messwerte messen, die sich der Umgebungstemperatur anpassen. Weiterhin ist von dem Motorblock und Kühlmittelkreislauf Temperatursensoren zu erwarten, dass diese im Aufwärmen und Abkühlen von der Wärmespeicherkapazität des Kühlmittels und des Motorblocks beeinflusst werden. Die abgasseitigen Temperatursensoren wärmen sich nach dem Start der Verbrennungskraftmaschine durch die heißen Abgase schnell auf.

Es gibt Ausführungen, bei denen der Zeitraum nach dem Startbefehl (ST) zum Starten der Verbrennungskraftmaschine für luftseitige (310) Temperatursensoren und für eine Gruppe von Motorblock- und Kühlmitteltemperatursensoren (320) eine zeitliche Verzögerung aufweist, welche sich von der zeitlichen Verzögerung der abgasseitigen (330) Temperatursensoren unterscheidet.

Durch das schnellere Aufheizen der Abgastemperaturen müssen die abgasseitigen Temperatursensoren früher gemessen werden, während bei den luftseitigen Temperatursensoren Umgebungsluft angesaugt wird und die Gruppe von Motorblock- und Kühlmitteltemperatursensoren durch die Wärmekapazität des Kühlmittels und des Motorblocks bzw. des Öles noch keine signifikante Erwärmung erfahren hat.

Es gibt Ausführungen, bei denen der Schwellenwert zu einem Paar von Schwellenwerten zugeordnet ist, das symmetrisch nach oben und unten um den Lageparameter angeordnet sind.

Es gibt Ausführungen, bei denen der Schwellenwert zu einem Paar von Schwellenwerten zugeordnet ist, das asymmetrisch nach oben und unten um den Lageparameter angeordnet sind.

Durch das Errechnen eines Lageparameters aus den Messwerten und das Errechnen eines Vergleichswertes zwischen dem Lageparameter und einem Messwert können für jeden Temperatursensor die Schwellenwerte asymmetrisch angeordnet werden. Dies bedeutet, dass der Abstand zwischen einem unteren Schwellenwert und dem Lageparameter nicht gleich dem Abstand von einem oberen Schwellenwert und dem Lageparameter sein muss.

Es gibt Ausführungen, bei denen der Lageparameter ein Median aus den Messwerten der mindestens drei Temperatursensoren ist.

Der Median hat den Vorteil, dass dieser immer die Messwerte sortiert und den mittleren Messwerte auswählt. Dadurch ist der Median unempfindlich gegenüber Ausreißern. Die Bestimmung eines Funktionskriteriums eines Temperatursensors eines Kraftfahrzeuges kann dabei mit mindesten drei Messwerten von je drei Temperatursensoren durchgeführt werden.

Es gibt Ausführungen, bei denen der Lageparameter ein arithmetisches Mittel aus den Messwerten von mindestens drei Temperatursensoren ist, wobei das arithmetische Mittel um den Messwert der mindestens drei Temperatursensoren, der die größte Abweichung von den anderen Messwerten hat und demnach ein Ausreißer ist, bereinigt ist. Hierbei handelt es sich um einen getrimmten Mittelwert. Falls einer der Messwerte ein Ausreißer ist und mit Treffsicherheit eliminiert werden kann reichen hierbei die Messwerte von drei Temperatursensoren. Kann der Ausreißer nicht treffsicher eliminiert werden, verbessert das Heranziehen von den Messwerten von vier oder mehr Temperatursensoren die Treffsicherheit.

Dabei können zumindest vier Temperatursensoren verwendet werden, um den Satz an Messwerten von einem Ausreißer bereinigen zu können.

Es gibt Ausführungen, bei denen ein Steuergerät mit einer Steuereinheit dazu eingerichtet ist, ein Verfahren zur Bestimmung eines Funktionskriteriums eines Temperatursensors eines Kraftfahrzeuges nach den obigen Ausführungen durchzuführen kann.

Es gibt Ausführungen, bei denen eine Verbrennungskraftmaschine mit einem Steuergerät nach obiger Ausführung ein Verfahren zur Bestimmung eines Funktionskriteriums eines Temperatursensors eines Kraftfahrzeuges nach den obigen Ausführungen durchzuführen kann.

Es gibt Ausführungen, bei denen ein Kraftfahrzeug mit einer Verbrennungskraftmaschine nach obiger Ausführung nach ein Verfahren zur Bestimmung eines Funktionskriteriums eines Temperatursensors eines Kraftfahrzeuges nach den obigen Ausführungen durchzuführen kann.

Ausführungsbeispiele der Erfindung werden nun beispielhaft und unter Bezugnahme auf die beigefügte Zeichnung beschrieben:
- Fig. 1: ist eine schematische Darstellung von einem Ausführungsbeispiel eines Verfahren zur Bestimmung eines Funktionskriteriums eines Temperatursensors eines Kraftfahrzeuges;
- Fig. 2: ist eine schematische Darstellung von einem Ausführungsbeispiel eines Verfahrens zum Feststellen, ob ein Kaltstart vorliegt, wie dieses in Fig. 1 angewendet werden kann;
- Fig. 3: ist eine schematische Darstellung von einem Ausführungsbeispiel eines Kraftfahrzeuges mir Steuergerät und Temperatursensoren;
- Fig. 4a: ist eine schematische Darstellung von einem Ausführungsbeispiel einer Errechnung eines Lageparameters mit symmetrisch um den Lageparameter angeordneten Schwellenwerten;
- Fig. 4b: ist eine schematische Darstellung von einem Ausführungsbeispiel einer Errechnung eines Lageparameters mit asymmetrisch um den Lageparameter angeordneten Schwellenwerten;
- Fig. 5: ist eine schematische Darstellung von einem Ausführungsbeispiel einer Errechnung eines Lageparameters mit symmetrisch um den Lageparameter angeordneten Schwellenwerten; und
- Fig. 6: ist eine schematische Darstellung eines Ausführungsbeispiels eines Kraftfahrzeuges mit als Verbrennungskraftmaschine ausgebildeter Antriebsmaschine und Steuergerät.

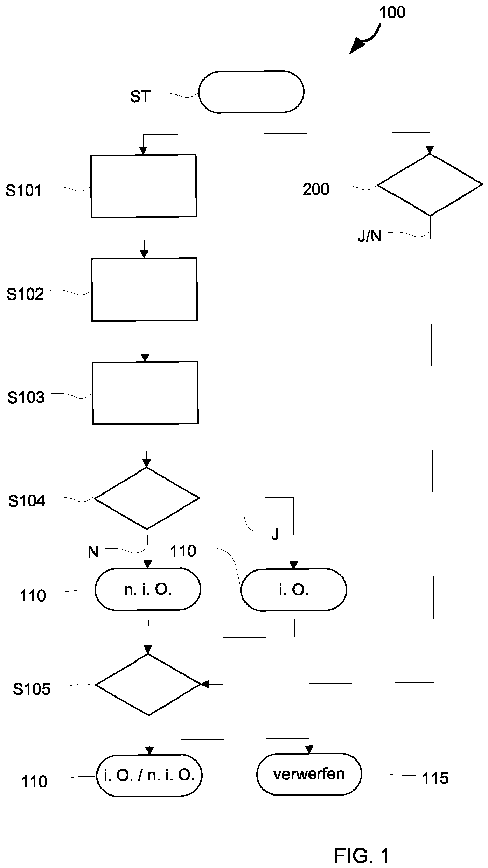

Fig. 1 ist eine schematische Darstellung von einem Ausführungsbeispiel eines Verfahrens zur Bestimmung eines Funktionskriteriums eines Temperatursensors eines Kraftfahrzeuges.

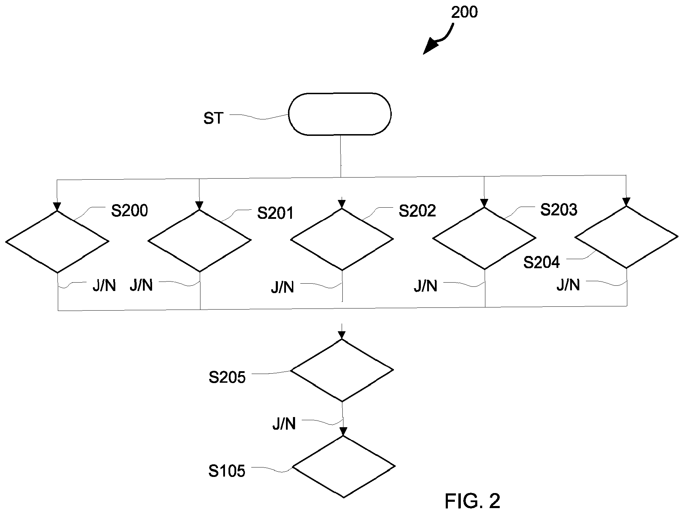

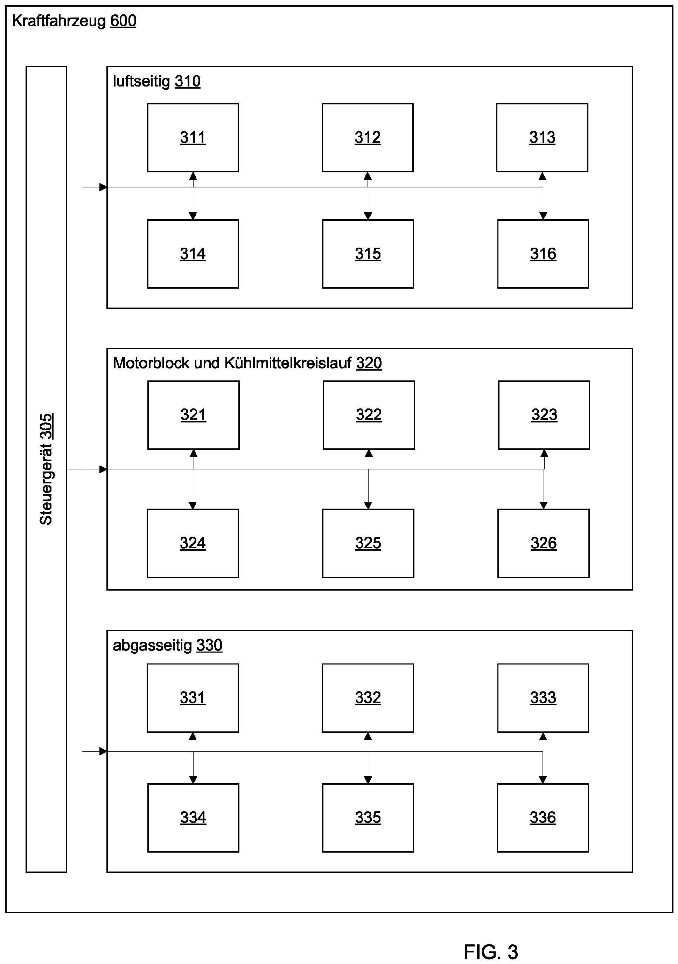

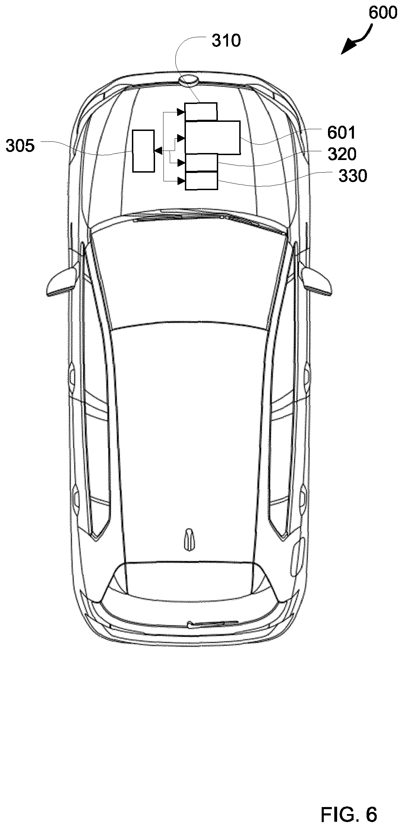

Das Verfahren 100 beginnt mit der Initialisierung (ST) des Steuergerätes (305 in Fig. 3 und 6) der als Verbrennungskraftmaschine ausgebildeten Antriebsmaschine (601 in Fig. 6). In dem Entscheidungsschritt 200 wird überprüft, ob die Kaltstartbedingungen erfüllt sind. Ein Ausführungsbeispiel von einer solchen Überprüfung der Kaltstartbedingungen ist in Fig. 2 dargestellt. Das Ergebnis, ob die Kaltstartbedingungen erfüllt sind oder nicht J/N, wird an den Schritt S105 übermittelt. Das Feststellen, ob die Kaltstartbedingungen erfüllt sind, wird parallel zu den Schritten S101 bis S104 ausgeführt. Dies liegt darin begründet, dass manche Kaltstartbedingungen, wie zum Beispiel die Erkennung von Sonneneinstrahlung oder eines Blockheaters (beides in Fig. 2), mehr Zeit benötigen als beispielsweise die Schritte S101 bis S104.

Im Schritt S101 werden Messwerte von mindestens drei Temperatursensoren erfasst. Das Erfassen der Messwerte geschieht nach dem Startbefehl ST zum Starten der Verbrennungskraftmaschine und kann somit vor bzw. kurz nach dem Start der Verbrennungskraftmaschine erfolgen. Dabei ist ein Messwert der Messwert des Temperatursensors, dessen Funktionskriterium festgestellt wird und die mindestens zwei weiteren Messwerte sind die Messwerte zweier weiterer Temperatursensoren, die in dem Kraftfahrzeug (600 in Fig. 6) verbaut sind. Nach dem Erfassen der Messwerte wird mit Schritt S102 fortgefahren.

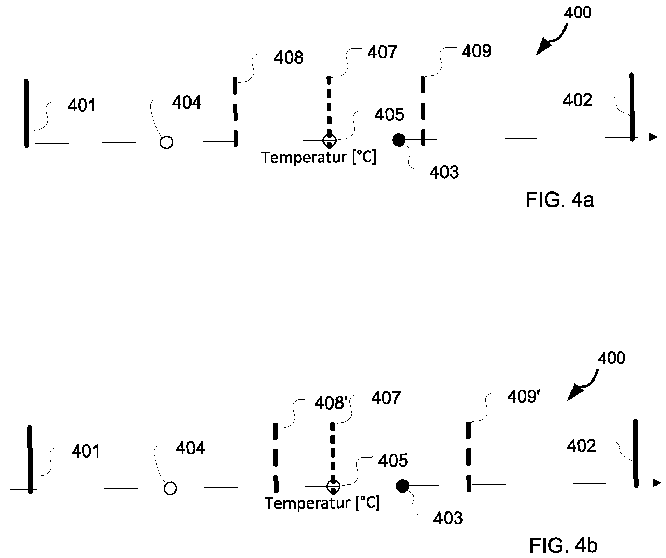

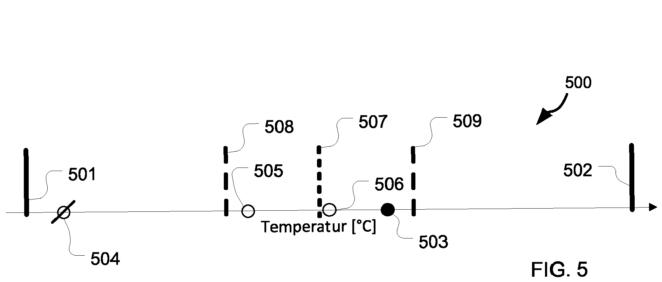

Im Schritt S102 wird ein Lageparameter (407 in Fig. 4a und 4b; 507 in Fig. 5) der Verteilung der im Schritt S101 erfassten Messwerte errechnet. Ein solcher Lageparameter kann zum Beispiel ein Median oder ein getrimmtes arithmetisches Mittel sein.

Nach der Bestimmung des Lageparameters wird in Schritt S103 mit dem Errechnen eines Vergleichswertes aus einem Messwert und dem errechneten Lageparameter fortgefahren. Der dafür herangezogene Messwert ist der Messwert des Temperatursensors, dessen Funktionskriterium festgestellt wird. Der Vergleichswert kann die Differenz zwischen dem Messwert und dem Lageparameter sein. Der Vergleichswert kann aber auch ein Quotient aus dem Messwert und dem Lageparameter sein.

Nach dem Errechnen des Vergleichswertes wird in Schritt S104 ein Vergleich des Vergleichswertes mit einem Schwellenwert (zum Beispiel 408, 409 in Fig. 4a; 408`, 409' in Fig. 4b; 508, 509 in Fig. 5) durchgeführt. Dabei kann festgestellt werden, ob der Vergleichswert größer ist als einen Schwellenwert, der von dem Vergleichswert nicht überschritten werden soll. Weiterhin kann festgestellt werden, ob der Vergleichswert kleiner ist als einen Schwellenwert, der von dem Vergleichswert nicht unterschritten werden soll. Ein Feststellen, ob der Vergleichswert innerhalb eines durch Schwellenwerte aufgespannten Akzeptanzbereiches liegt, ist durch den Vergleich des Vergleichswertes mit zwei Schwellenwerten, von denen ein unterer Schwellenwert nicht unterschritten und ein oberer Schwellenwert nicht überschritten werden soll, möglich. Hierbei können die Schwellenwerte ein Paar symmetrisch um den Lageparameter angeordneter Schwellenwerte sein. Die Schwellenwerte können aber auch ein Paar asymmetrisch um den Lageparameter angeordneter Schwellenwerte sein.

Ist in den Vergleichen ein Vergleichswert größer als ein Schwellenwert, der von dem Vergleichswert nicht überschritten werden soll, oder kleiner als ein Schwellenwert, der von dem Vergleichswert nicht unterschritten werden soll N, so wird ein "nicht in Ordnung" (n. i. O.) Funktionskriterium 110 ermittelt. Ist in den Vergleichen jedoch der Vergleichswert kleiner als ein Schwellenwert, der von dem Vergleichswert nicht überschritten werden soll, oder größer als ein Schwellenwert, der von dem Vergleichswert nicht unterschritten werden soll festgestellt J, so wird ein "in Ordnung" (i. O.) Funktionskriterium 110 ermittelt.

Die Funktionskriterien werden an dieser Stelle ermittelt und nicht festgestellt, da die Abfrage, ob die Kaltstartbedingungen erfüllt sind oder nicht noch nicht eingeflossen ist. Die Kaltstartbedingungen stellen sicher, dass die Erfassung des Funktionskriteriums unter vorgesehenen Bedingungen durchgeführt wurde und ob dem Ergebnis somit Vertraut werden kann. Dies entspricht einer nachträglichen Funktionsfreigabe.

Für den Entscheidungsschritt S105 wird das Ergebnis, ob die Kaltstartbedingungen erfüllt sind oder nicht J/N herangezogen. Sind die Kaltstartbedingungen nicht erfüllt N, so kann auf der Basis der Vergleiche kein Funktionskriterium 110 festgestellt werden und das Verfahren 100 endet damit, dass das ermittelte Funktionskriterium 110 (entweder "in Ordnung" oder "nicht in Ordnung") verworfen wird 115. Sind die Kaltstartbedingungen jedoch erfüllt J, so kann auf der Basis der Vergleiche ein Funktionskriterium 110 festgestellt werden und das Verfahren 100 endet mit dem Feststellen des bestimmten Funktionskriteriums 110. Dabei wird das Festgestellte Funktionskriterium 110 weitergemeldet.

Fig. 2 ist eine schematische Darstellung von einem Ausführungsbeispiel eines Verfahrens zum Feststellen, ob ein Kaltstart vorliegt, wie dieses in Fig. 1 angewendet werden kann.

Das Verfahren 200 beginnt mit der Initialisierung (ST) des Steuergerätes (305 In Fig. 3 und 6) der als Verbrennungskraftmaschine ausgebildeten Antriebsmaschine (601 in Fig. 6). Die Schritte S200 bis S204 können nach dem Startbefehl ST unabhängig voneinander durchgeführt werden. Die Schritte S200 bis S204 können nach dem Startbefehl ST und somit kurz vor oder kurz nach dem Start der Verbrennungskraftmaschine durchgeführt werden bzw. beginnen. Manche der Schritte benötigen mehr Zeit zum Feststellen des jeweiligen Kaltstartkriteriums. Somit werden die Schritte S200 bis S204 in Verfahren 200 als parallele Schritte ausgeführt.

In Schritt S200 wird überprüft, ob die Abstellzeit der Verbrennungskraftmaschine einen vorbestimmten Zeitwert, zum Beispiel 27000 s, überschritten hat. Schritt S200 übermittelt ob der vorbestimmte Zeitwert durch die Abstellzeit überschritten wurde J/N. Hat die Abstellzeit den vorbestimmten Zeitwert nicht überschritten, wird übermittelt, dass diese Kaltstartbedingung nicht erfüllt ist N. Hat die Abstellzeit den vorbestimmten Zeitwert jedoch überschritten, wird übermittelt, dass diese Kaltstartbedingung erfüllt ist J.

In Schritt S201 wird überprüft, ob eine Motorblockheizung (auch "engine block heater" oder "block heater") verbaut ist und sichergestellt, dass die Verbrennungskraftmaschine nicht vorgeheizt wurde. Schritt S201 übermittelt ob der Motorblock vorgeheizt wurde J/N. Wurde die Verbrennungskraftmaschine durch eine Motorblockheizung vorgewärmt, wird übermittelt, dass diese Kaltstartbedingung nicht erfüllt ist N. Wurde die Verbrennungskraftmaschine jedoch nicht durch eine Motorblockheizung vorgewärmt, wird übermittelt, dass diese Kaltstartbedingung erfüllt ist J.

In Schritt S202 wird überprüft, ob es eine Sonneneinstrahlung auf das Kraftfahrzeug (600 in Fig. 6) gegeben hat, zum Beispiel im Zeitraum des Abstellens oder kurz vor dem Start der Verbrennungskraftmaschine, die zum Beispiel einen vorbestimmten Intensitätswert in einer vorab definierten Länge des Zeitraums überschreitet. Dadurch können Temperatursensoren nahe an der Oberseite und in dem Innenraum des Kraftfahrzeuges stärker erwärmt werden als andere Temperaursensoren. Schritt S202 übermittelt ob es eine solche Sonneneinstrahlung gegeben hat J/N. Hat es eine solche Sonneneinstrahlung gegeben, wird übermittelt, dass diese Kaltstartbedingung nicht erfüllt ist N. Hat es jedoch keine solche Sonneneinstrahlung gegeben, wird übermittelt, dass diese Kaltstartbedingung erfüllt ist J.

In Schritt S203 wird überprüft, ob eine Standheizung das Kraftfahrzeug vorgeheizt hat, zum Beispiel den Innenraum. Schritt S203 übermittelt, ob eine Standheizung das Kraftfahrzeug vorgeheizt hat J/N. Hat eine Standheizung Teile des Kraftfahrzeuges vorgeheizt, wird übermittelt, dass diese Kaltstartbedingung nicht erfüllt ist N. Hat eine Standheizung das Kraftfahrzeug jedoch nicht vorgeheizt, wird übermittelt, dass diese Kaltstartbedingung erfüllt ist J.

Im Schritt S204 wird überprüft, ob eine Maximalzeit nach einem Start eines Steuergerätes der Verbrennungskraftmaschine überschritten ist. Schritt S204 übermittelt, ob eine Maximalzeit nach einem Start eines Steuergerätes der Verbrennungskraftmaschine überschritten ist J/N. Ist die Maximalzeit überschritten , wird übermittelt, dass diese Kaltstartbedingung nicht erfüllt ist N. Ist die Maximalzeit jedoch nicht überschritten, wird übermittelt, dass diese Kaltstartbedingung erfüllt ist J.

In Schritt S205 wird herangezogen, ob die Kaltstartbedingungen aus den Schritten S200 bis S204 erfüllt sind. Der Schritt S205 übermittelt beispielsweise ob alle Kaltstartbedingungen erfüllt sind J/N und somit ein Kaltstart vorliegt. Ist eine der Kaltstartbedingungen nicht erfüllt, wird übermittelt, dass kein Kaltstart vorliegt N. Sind alle Kaltstartbedingungen erfüllt, wird übermittelt, dass ein Kaltstart vorliegt J, somit erfolgt die Funktionsfreigebe für das Verfahren zur Bestimmung eines Funktionskriteriums eines Temperatursensors eines Kraftfahrzeuges. Das Ergebnis, ob ein Kaltstart vorliegt wird J/N wird an den Entscheidungsschritt S105 (auch in Fig. 1) übermittelt.

Fig. 3 ist eine schematische Darstellung von einem Ausführungsbeispiel eines Kraftfahrzeuges mit Steuergerät und Temperatursensoren.

Die Temperatursensoren des Kraftfahrzeuges 600 sind in mehrere Gruppen gruppiert, luftseitig 310, Motorblock und Kühlmittelkreislauf 320 und abgasseitig 330. Es kann auch eine weitere Gruppe geben, die Temperatursensoren enthält, welche in Elektrobauteilen verbaut sind. Das Steuergerät 305 ist mit jedem der Temperatursensoren verbunden und erfasst Messwerte der Temperatursensoren.

Die luftseitigen 310 Temperatursensoren befinden sich zum Teil in der Ansaugung der Verbrennungskraftmaschine oder in Bereichen, die sie am ehesten der Umgebungstemperatur der Luft anpassen. Die luftseitigen 301 Temperatursensoren beinhalten zum Beispiel einen Gastemperatursensor 311 vor einem Ladeluftkühler, einen Gastemperatursensor 312 nach dem Ladeluftkühler, einen Umgebungstemperatursensor 313, einen Kraftstofftemperatursensor 314, einen Motorsteuergerättemperatursensor 315 und einen Gastemperatursensor 316 in der Frischluftansaugung.

Die Motorblock- und Kühlmittelkreislauftemperatursensoren 320 befinden sich am Motorblock oder im Kühlmittel Kreislauf. Die Motorblock. und Kühlmittelkreislauftemperatursensoren 320 beinhalten zum Beispiel einen Kühlmitteltemperatursensor 321 am Motoraustritt, einen Kühlmitteltemperatursensor 322 am Kühleraustritt, einen Kühlmitteltemperatursensor 333 vor dem Hochdruck-Abgas-Rückführungs-Kühler, einen Kühlmitteltemperatursensor 334 vor dem Ladeluftkühler, einen Öltemperatursensor 335 und einen Kühlmitteltemperatursensor 336 vor dem Niederdruck-Abgas-Rückführungs-Kühler.

Weiterhin können auch Temperatursensoren an Antriebskomponenten bzw. Motoren und in Kühlkreisläufen von anderen Antriebsarten umfasst sein. Andere Antriebsarten umfassen zum Beispiel Wasserstoffverbrennungsantriebe, Brennstoffzellenantriebe und Elektroantriebe. Diese können dabei einzeln oder in Kombination miteinander oder mit einer Verbrennungskraftmaschine verbaut sein.

Die abgasseitigen 330 Temperatursensoren sitzen im Abgasstrang und messen die Abgastemperatur oder die Temperatur von Bauteilen, die mit dem Abgas in Berührung kommen. Die abgasseitigen 330 Temperatursensoren beinhalten zum Beispiel einen Abgastemperatursensor 331 vor der Turbine, einen Abgastemperatursensor 332 vor dem Diesel-Oxidationskatalysator (DOC), einen Abgastemperatursensor 333 nach dem DOC, einen Abgastemperatursensor 334 nach dem Dieselpartikelfilter (DPF), einen Abgastemperatursensor 335 nach dem Hochdruck-Abgas-Rückführungs-Kühler und einen Abgastemperatursensor 336 nach dem Niederdruck-Abgas-Rückführungs-Kühler.

Von den luftseitigen 310 Temperatursensoren ist zu erwarten, dass diese beim Abkühlen schnell Messwerte messen, die sich der Umgebungstemperatur anpassen. Weiterhin ist von dem Motorblock und Kühlmittelkreislauf 320 Temperatursensoren zu erwarten, dass diese im Aufwärmen und Abkühlen von der Wärmespeicherkapazität des Kühlmittels und des Motorblocks beeinflusst werden. Die abgasseitigen 330 Temperatursensoren wärmen sich nach dem Start der Verbrennungskraftmaschine durch die heißen Abgase schnell auf.

Fig. 4a ist eine schematische Darstellung von einem Ausführungsbeispiel einer Errechnung eines Lageparameters mit symmetrisch um den Lageparameter angeordneten Schwellenwerten.

Dargestellt ist eine Temperaturachse 400 eines Temperaturmessbereichs eines Temperatursensors von einer unteren Messbereichsgrenze 401 bis hin zu einer oberen Messbereichsgrenze 402. Auf der Temperaturachse sind drei Messwerte 403, 404 und 405 von jeweils drei Temperatursensoren aufgetragen. Der Messwert 403 ist durch einen befüllten Kreis gekennzeichnet, da dieser den Messwert des Temperatursensors ist, dessen Funktionskriterium (110 in Fig. 1) festgestellt werden soll.

In dieser Darstellung ist der Lageparameter 407 der Median der Messwerte 403, 404 und 405. Damit entspricht der Lageparameter 407 dem Messwert 405. Die Schwellenwerte, welche symmetrisch um den Lageparameter angeordnet sind, sind hier als Lageparameter minus den unteren Schwellenwert 408 und Lageparameter plus den oberen Schwellenwert 409 dargestellt (auch: dargestellte Schwellenwerte 408, 409), um diese auf der gleichen Temperaturachse 400 darstellen zu können.

Der Messwert 403 liegt innerhalb des Akzeptanzbereiches, der von dem Lageparameter minus dem unteren Schwellenwert 408 und dem Lageparameter plus dem oberen Schwellenwert 409 aufgespannt wird, und somit wird ein "in Ordnung" Funktionskriterium bestimmt.

Die dargestellten Schwellenwerte 408 und 409 sind spezifisch für den Messwert 403. Die Schwellenwerte für den Messwert 404 können einen größeren Akzeptanzbereich aufspannen, sodass auch für den Temperatursensor des Messwertes 404 ein "in Ordnung" Funktionskriterium aufgrund des gleichen Satzes an Messwerten bestimmt werden kann. Die Bestimmung des Funktionskriteriums kann für alle Temperatursensoren der beteiligten Messwerte separat durchgeführt werden.

Fig. 4b ist eine schematische Darstellung von einem Ausführungsbeispiel einer Errechnung eines Lageparameters mit asymmetrisch um den Lageparameter angeordneten Schwellenwerten.

Die Temperaturachse 400 eines Temperaturmessbereichs eines Temperatursensors von einer unteren Messbereichsgrenze 401 bis hin zu einer oberen Messbereichsgrenze 402, sowie die Messwerte 403, 404 und 405 sind identisch zu denen in Fig. 4a. Auch der Lageparameter 407 ist wieder als der gleiche Median dargestellt.

Lediglich der Akzeptanzbereich, der von dem Lageparameter minus dem unteren Schwellenwert 408 und dem Lageparameter plus dem oberen Schwellenwert 409 aufgespannt wird, ist asymmetrisch um den Lageparameter 407 herum angeordnet.

Eine solche Anordnung ist für Temperatursensoren sinnvoll, von denen eine einseitige Abweichung von einem Medianwert zu erwarten ist, ohne dass eine Fehlfunktion vorliegt. Eine solche Abweichung könnte zum Beispiel in einer besonderen Empfindlichkeit gegenüber Sonneneinstrahlung, die den Intensitätswert aus den Kaltstartbedingungen noch nicht überschritten hat, begründet liegen.

Fig. 5 ist eine schematische Darstellung von einem Ausführungsbeispiel einer Errechnung eines Lageparameters mit symmetrisch um den Lageparameter angeordneten Schwellenwerten.

Dargestellt ist eine Temperaturachse 500 eines Temperaturmessbereichs eines Temperatursensors von einer unteren Messbereichsgrenze 501 bis hin zu einer oberen Messbereichsgrenze 502. Auf der Temperaturachse sind vier Messwerte 503, 504, 505 und 506 von jeweils vier Temperatursensoren aufgetragen. Der Messwert 503 ist durch einen befüllten Kreis gekennzeichnet, da dieser den Messwert des Temperatursensors ist, dessen Funktionskriterium (110 in Fig. 1) festgestellt werden soll.

In dieser Darstellung ist der Lageparameter 507 der das arithmetische Mittel der Messwerte 503, 505 und 506. Der Satz an Messwerten wurde um den Messwert 504 bereinigt, was durch das Durchstreichen symbolisiert wird. Dieser Messwert 504 wurde als Ausreißer identifiziert. Damit ist der Lageparameter 507 in der Nähe des Messwerts 506. Die Schwellenwerte, welche symmetrisch um den Lageparameter angeordnet sind, sind hier als Lageparameter minus den unteren Schwellenwert 508 und Lageparameter plus den oberen Schwellenwert 509 dargestellt (auch: dargestellte Schwellenwerte 508, 509), um diese auf der gleichen Temperaturachse 500 darstellen zu können.

Der Messwert 503 liegt innerhalb des Akzeptanzbereiches, der von dem Lageparameter minus dem unteren Schwellenwert 508 und dem Lageparameter plus dem oberen Schwellenwert 509 aufgespannt wird, und somit wird ein "in Ordnung" Funktionskriterium bestimmt. Würde der Messwert 503 außerhalb des Akzeptanzbereiches liegen, würde ein "nicht in Ordnung" Funktionskriterium bestimmt.

Die dargestellten Schwellenwerte 508 und 509 sind spezifisch für den Messwert 503. Die Schwellenwerte für den Messwert 504 können einen größeren Akzeptanzbereich aufspannen, sodass auch für den Temperatursensor des Messwertes 504 ein "in Ordnung" Funktionskriterium aufgrund des gleichen Satzes an Messwerten bestimmt werden kann. Dies kann auch durch eine asymmetrische Anordnung der Schwellenwerte erfolgen. Die Bestimmung des Funktionskriteriums kann für alle Temperatursensoren der beteiligten Messwerte separat durchgeführt werden.

Auch mit der Anwendung eines arithmetischen Mittels als Lageparameter 507 können analog zu Fig. 4b die Schwellenwerte 508 und 509 asymmetrisch angeordnet werden.

Fig. 6 ist eine schematische Darstellung eines Ausführungsbeispiels eines Kraftfahrzeuges mit als Verbrennungskraftmaschine ausgebildeten Antriebsmaschine und Steuergerät.

Das Kraftfahrzeug 600 enthält eine als Verbrennungskraftmaschine ausgebildete Antriebsmaschine 601 und ein Steuergerät 305.

Das Steuergerät 305 steuert oder regelt die als Verbrennungskraftmaschine ausgebildete Antriebsmaschine 601 und erfasst Messwerte der Temperatursensoren aus den Gruppen, luftseitig 320, abgasseitig 330, und im Motorblock und Kühlmittelkreislauf 320.

Weiterhin können auch Temperatursensoren an Antriebskomponenten bzw. Motoren und in Kühlkreisläufen von anderen Antriebsarten umfasst sein. Andere Antriebsarten umfassen zum Beispiel Wasserstoffverbrennungsantriebe, Brennstoffzellenantriebe und Elektroantriebe. Diese können dabei einzeln oder in Kombination miteinander oder mit einer Verbrennungskraftmaschine verbaut sein. Dabei können die Antriebskomponenten auch die als Verbrennungskraftmaschine ausgebildeten Antriebsmaschine 601 ersetzen oder unterstützen.

Die gezeigten Ausführungsbeispiele sind als weitere Erklärung der vorliegenden Erfindung zu verstehen. Eine Kombination der Ausführungsbeispiele ist vorgesehen. Für genauen Umfang der Erfindung wird auf die folgenden Ansprüche verwiesen.

### Bezugszeichenliste

- 100, 200: Verfahren
- 110: Funktionskriterium
- 210: Funktionsfreigabe
- 305: Steuergerät
- 310: luftseitig
- 311 - 315: Temperatursensoren
- 320: Motorblock und Kühlmittelkreislauf
- 321 - 327: Temperatursensoren
- 330: abgasseitig
- 331 - 336: Temperatursensoren
- 400,500: Temperaturachse
- 401, 501: untere Messbereichsgrenze
- 402, 502: obere Messbereichsgrenze
- 403 - 405, 503 - 506: Messwerte
- 407,507: Lageparameter
- 408, 408`, 508: unterer dargestellter Schwellenwert
- 409, 409`, 509: oberer dargestellter Schwellenwert
- 600: Kraftfahrzeug
- 601: Antriebsmaschine

## Patentansprüche

1. Verfahren (100) zur Bestimmung eines Funktionskriteriums (110) eines Messwertgebers eines Kraftfahrzeuges (600) umfassend:
- Feststellen, mittels Vorbedingungen, ob ein vorgegebener Fahrzeugzustand des Kraftfahrzeuges vorliegt,
- Erfassen von Messwerten (403, 404, 405; 503, 504, 505, 506) von mindestens drei Messwertgebern, die die gleiche Messgröße messen,
- Errechnen eines Lageparameters (407, 507) aus den erfassten Messwerten (403, 404, 405; 503, 504, 505, 506)
- Errechnen eines Vergleichswertes aus den erfassten Messwerten (403, 404, 405; 503, 504, 505, 506) zu dem errechneten Lageparameter (407, 507),
- Ermitteln des Funktionskriteriums (110) des Messwertgebers anhand eines Vergleichs des errechneten Vergleichswertes mit einem Schwellenwert (408, 409; 408`, 409`; 508, 509), wobei
das Erfassen der Messwerte (403, 404, 405; 503, 504, 505, 506) in einem Zeitraum mit der Initialisierung (ST) des Steuergerätes (305) einer Antriebsmaschine (601) durchgeführt wird, wenn die Vorbedingungen erfüllt sind und somit der vorgegebener Fahrzeugzustand vorliegt wird das ermittelte Funktionskriterium festgestellt.

2. Verfahren nach Anspruch 1 wobei der Messwertgeber ein Temperatursensor ist, der vorgegebene Fahrzeugzustand eine Kaltstart ist, die Vorbedingungen Kaltstartbedingungen sind und die Antriebsmaschine eine Verbrennungskraftmaschine ist.

3. Verfahren (100) nach Anspruch 2, wobei die Temperatursensoren entweder aus einer Gruppe von luftseitigen (310) Temperatursensoren, einer Gruppe von Motorblock- und Kühlmitteltemperatursensoren (320) oder einer Gruppe von abgasseitigen (330) Temperatursensoren gewählt sind.

4. Verfahren (100) nach Anspruch 2 oder 3, wobei der Zeitraum nach dem Startbefehl (ST) zum Starten der Verbrennungskraftmaschine für luftseitige (310) Temperatursensoren und für eine Gruppe von Motorblock- und Kühlmitteltemperatursensoren (320) eine zeitliche Verzögerung aufweist, welche sich von der zeitlichen Verzögerung der abgasseitige (330) Temperatursensoren unterscheidet.

5. Verfahren (100) nach einem der Ansprüche 2 bis 4, wobei der Schwellenwert (408, 408; 508, 509) zu einem Paar von Schwellenwerten zugeordnet ist, das symmetrisch nach oben und unten um den Lageparameter (407, 507) angeordnet ist, oder wobei der Schwellenwert (408`, 409`) zu einem Paar von Schwellenwerten zugeordnet ist, das asymmetrisch nach oben und unten um den Lageparameter (407) angeordnet ist.

6. Verfahren nach einem der Ansprüche 2 bis 5, wobei der Lageparameter (407) ein Median aus den Messwerten (403, 404, 405) der mindestens drei Temperatursensoren ist.

7. Verfahren nach einem der Ansprüche 2 bis 6, wobei der Lageparameter (507) ein arithmetisches Mittel aus den Messwerten (503, 504, 505, 506) von mindestens vier Temperatursensoren ist, wobei das arithmetische Mittel um den Messwert (503, 504, 505, 506) der mindestens vier Temperatursensoren, der die größte Abweichung von den anderen Messwerten hat, bereinigt ist.

8. Steuergerät (305) mit einer Steuereinheit, die dazu eingerichtet ist, das Verfahren (100) nach einem der vorherigen Ansprüche durchzuführen.

9. Verbrennungskraftmaschine (601) mit dem Steuergerät (305) nach Anspruch 8.

10. Kraftfahrzeug (600) mit der Verbrennungskraftmaschine (601) nach Anspruch 9.
